# DEMANDE DE BREVET EUROPEEN

(11) **EP 0 999 374 A1**
(43) Date de publication de la demande: **10.05.2000**
(21) Numéro de dépôt: 99402679.7
(22) Date de dépôt: 28.10.1999
(51) Int. Cl.: F16D 23/06

(54) **Dispositif de synchronisation pour boîte de vitesses et élément d'armement de synchroniseur**

(30) Priorité: 06.11.1998 FR 9813999
(71) Demandeur: RENAULT, 92109 Boulogne-Billancourt (FR)
(72) Inventeur: Fligliolini, Bruno, 94190 Villeneuve Saint Georges (FR); Ledit, Bruno, 94290 Villeneuve Le Roi (FR)

(57) **Abrégé**

Dispositif de synchronisation d'un pignon libre (4) en rotation autour d'un arbre de boîte de vitesses (2) avec un moyeu (1) solidaire de celui-ci, muni d'un baladeur (5) présentant au moins une rampe d'armement (6) qui repousse vers le pignon un anneau de synchronisation (3) par l'intermédiaire d'un moyen d'armement (7), déformable élastiquement sous la poussée des rampes d'armement, et au moins une denture (55) qui rencontre la denture du pignon (44) après avoir traversé la denture de l'anneau (33), caractérisé en ce que le moyen d'armement (7) est une pièce comportant une première partie supérieure arrondie (71), coopérant avec les rampes d'armement (6) et constituée d'un enroulement hélicoïdal, et une deuxième partie inférieure, coopérant avec les anneaux de synchronisation (3) et composée de deux retours latéraux identiques (7a, 7b).

## Description

L'invention se rapporte aux synchroniseurs de boîte de vitesses manuelle, dont la fonction essentielle est d'égaliser par frottement les vitesses d'un arbre de la boîte et d'un pignon fou de vitesse, avant de réaliser le crabotage de ces deux organes, par leurs dentures respectives.

Un tel synchroniseur comporte principalement un baladeur, se déplaçant sous la commande d'une fourchette, le long d'un moyeu claveté sur un arbre de sortie de boîte de vitesses, de façon à venir craboter la denture d'un pignon de vitesse monté fou sur l'arbre, après avoir rencontré celle d'un anneau de synchronisation.

De façon classique, le baladeur du synchroniseur présente au moins une rampe d'armement qui repousse vers le pignon l'anneau de synchronisation, par l'intermédiaire d'éléments d'armement. L'anneau coopère alors avec le pignon afin d'égaliser la vitesse de rotation de ce dernier avec celle du baladeur, avant de permettre le crabotage de ces deux éléments.

Dans les dispositifs de synchronisation connus, la fonction d'armement, consistant à repousser l'anneau de synchronisation sur le pignon, et la fonction de maintien du baladeur en position neutre, c'est-à-dire lorsque les pignons associés au baladeur ne sont pas sollicités, est mise en oeuvre de différentes façons.

Selon une disposition connue, l'élément d'armement peut être constitué d'un cylindre monté sur une feuille de matériau suffisamment rigide pour être mise en forme par pliage. Le cylindre participe à l'effort d'armement sous la poussée de la rampe d'armement et entraîne la feuille qui pousse l'anneau de synchronisation puis qui, par déformation, permet l'effacement du cylindre et le passage du baladeur vers le pignon.

Ces moyens d'armement sont donc en deux parties, dont le montage successif sous le baladeur est relativement difficile, l'opération étant à réaliser autant de fois qu'il y a de rampes d'armement. De plus, les pièces étant petites, il existe un risque certain de perte d'un élément à l'intérieur de la boîte de vitesses, ce qui met en péril la fiabilité de celle-ci.

La publication EP- 870 941 décrit un autre type d'élément d'armement déformable élastiquement sous la poussée d'une rampe d'armement. Cet élément présente une base entrant en contact avec l'anneau et une partie escamotable vers l'intérieur sous la poussée de la rampe d'armement. Il est réalisé d'une seule pièce obtenue par pliage d'une feuille de matériau suffisamment rigide, formant lame de ressort. La partie escamotable sous la poussée de la rampe d'armement est recourbée sur elle-même, de façon à rentrer vers l'intérieur de l'élément.

Cependant, la partie escamotable de cet élément n'est pas symétrique, de sorte qu'elle ne nécessite pas le même effort pour être déformée, selon que la rampe du baladeur exerce son effort de poussée en direction du pignon de gauche ou en direction du pignon de droite. Ainsi, le moyen d'armement n'est pas symétrique et son utilisation s'avère impossible dans un synchroniseur double, muni de deux anneaux de synchronisation déplaçables respectivement en direction d'un premier et d'un second pignon de vitesse.

De plus, si l'on veut passer à la fabrication d'un autre type d'élément d'armement, de taille supérieure par exemple, l'utilisation d'un matériau déformé par pliage, comme le feuillard, engendrera de nombreux coûts. En effet, le changement de forme de l'élément d'armement va nécessiter d'importantes modifications dans la configuration des machines de pliage, dont le réglage nécessite une grande précision. La transition entre deux modèles d'éléments d'armement sera donc relativement longue et coûteuse.

Enfin, ce type de fabrication, par l'intervention d'étapes de pliage, n'assure pas une parfaite symétrie de la pièce réalisée et particulièrement une parfaite réalisation de la partie arrondie de ladite pièce.

L'invention a donc pour objet de remédier à ces inconvénients en proposant un élément d'armement de structure simple et symétrique, déformable élastiquement sous la poussée des rampes d'armement.

Selon un mode de réalisation préféré, le moyen d'armement selon l'invention comporte une base, constituée de pattes et entrant en contact avec l'anneau, et une partie supérieure, entrant en contact avec au moins une rampe d'armement du baladeur.

Selon un mode de réalisation privilégié, le moyen d'armement selon l'invention est réalisé d'une seule pièce, en fil métallique, et se déforme principalement au niveau des pattes dudit élément.

D'autres avantages et caractéristiques de l'invention seront mis en évidence dans la description suivante, donnée à titre d'exemple, en référence aux dessins annexés sur lesquels:
- la figure 1 est une coupe longitudinale du dispositif de synchronisation de l'invention,
- la figure 2 est une vue en perspective de l'élément d'armement,
- la figure 3 est une vue de face de cet élément,
- la figure 3a est une vue de dessus, et
- la figure 3b est une vue de dessus et de côté de celui-ci.

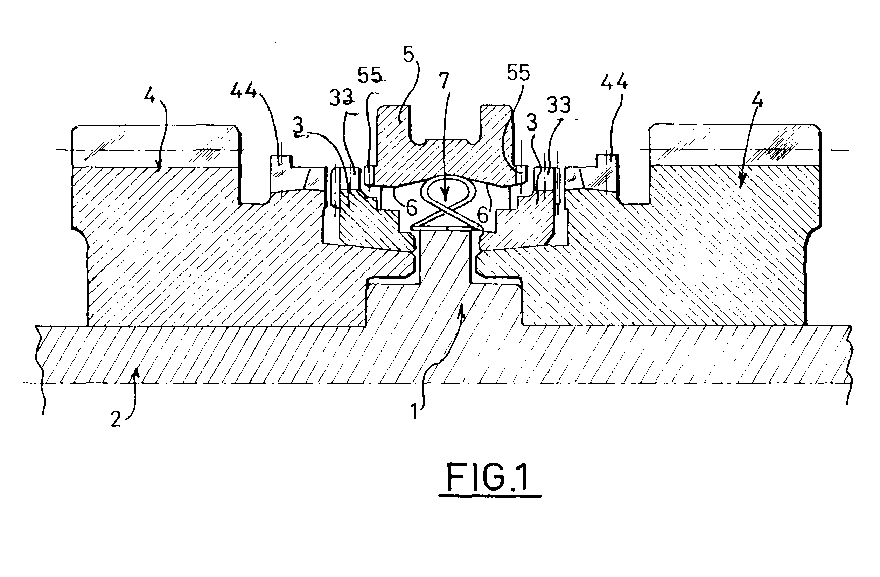

La figure 1 représente un synchroniseur comportant, de façon connue, un moyeu 1, solidaire d'un arbre rotatif 2, tel que l'arbre secondaire d'une boîte de vitesses mécanique. Ce synchroniseur est double car il est muni de deux anneaux de synchronisation 3, déplaçables en direction respectivement d'un premier et d'un second pignon de vitesse 4, pour engager deux rapports distincts sous la commande d'un baladeur 5, sollicité par l'intermédiaire d'un mécanisme de commande non représenté, à partir du levier de changement de vitesses du véhicule.

Le baladeur présente des dentures latérales 55, destinées à rencontrer les dentures 44 des pignons 4, après avoir traversé les dentures 33 des anneaux de synchronisation 3. La face inférieure du baladeur 5 présente deux rampes d'armement symétriques 6 inclinées, coopérant, avec les moyens d'armement 7 faisant l'objet de l'invention.

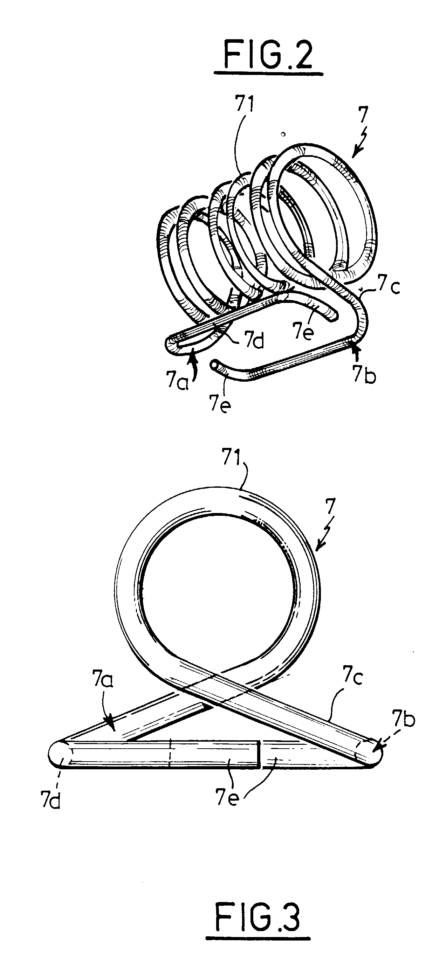

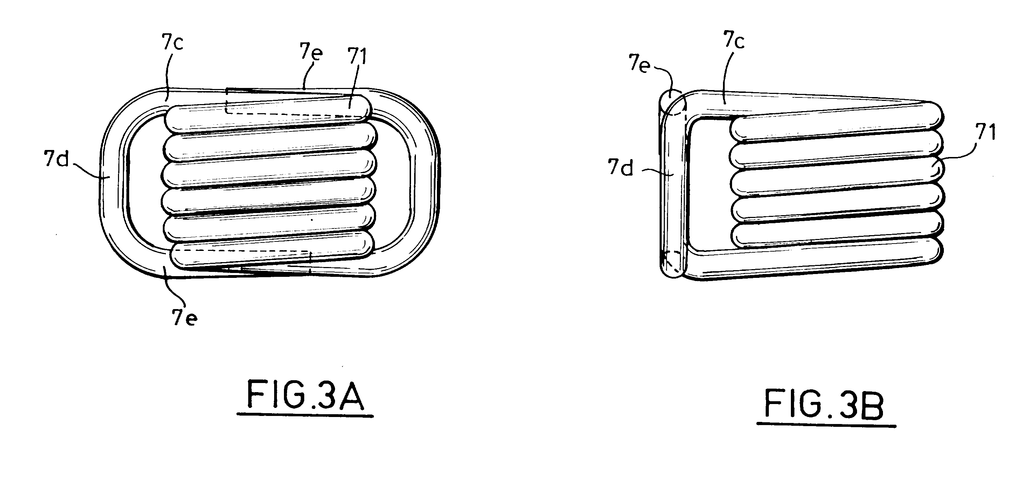

En se reportant aux figures 2, 3a, 3b, on voit que l'élément d'armement 7 est réalisé d'une seule pièce. Il est réalisé en fil métallique.

Dans un exemple préféré de réalisation, l'élément d'armement 7 possède une première partie supérieure sensiblement circulaire 71 composée d'un enroulement hélicoïdal. Les spires de cet enroulement hélicoïdal peuvent être jointives ou non. Cette partie supérieure cylindrique 71 entre en contact selon une génératrice transversale avec les rampes d'armement 6 du baladeur 5 et transmet leur effort de poussée.

Une deuxième partie inférieure se compose de deux retours latéraux 7a ou 7b identiques. Cette partie coopère avec les anneaux de synchronisation 3 pour entraîner ceux-ci vers le pignon de vitesse. Chacun des retours latéraux 7a et 7b comporte une première branche 7c qui est dans le prolongement de la dernière spire de chaque extrémité de l'enroulement 71 et orientée vers l'extérieur de ce dernier. Cette première branche 7c est reliée à une deuxième branche 7d, orientée selon l'axe de l'enroulement 71, et dirigée vers l'extrémité opposée de ce dernier. Une dernière branche 7e est reliée à la deuxième branche 7d. Elle est dirigée vers l'intérieur de l'enroulement 71 et sensiblement perpendiculaire à la branche 7d. Les branches 7d et 7e constituent ainsi un support de l'élément d'armement 7.

L'élément d'armement 7 selon l'invention comporte donc des retours latéraux 7a et 7b repliés de façon à permettre à la partie supérieure 71 de s'affaisser sur eux, sous la poussée des rampes d'armement 6.

Le moyen d'armement selon l'invention coopère avec les rampes d'armement 6 du baladeur 5 par la partie supérieure 71 en enroulement hélicoïdal qui vient en butée selon une génératrice transversale contre la rampe d'armement sollicitée lorsque ledit baladeur se déplace longitudinalement sous l'action des commandes du levier de vitesses. Cette coopération entraîne le déplacement de l'élément d'armement 7 en direction de l'anneau de synchronisation 3, puis le déplacement dudit anneau vers le pignon choisi. En fin de course, le baladeur 5 vient bloquer l'élément d'armement 7 contre l'anneau, ledit moyen s'effaçant sous le baladeur grâce à son abaissement dû principalement à sa déformation au niveau des pattes 7a et 7b.

Ainsi, les efforts à exercer pour déformer élastiquement l'élément d'armement de l'invention sont identiques, selon que le baladeur se déplace vers le pignon de droite ou vers le pignon de gauche. Avec cet élément d'armement, la synchronisation de deux pignons de vitesse coopérant avec un synchroniseur s'effectue dans les mêmes conditions. De plus, cet élément possède une structure particulièrement simple qui permet de réduire au maximum son coût de fabrication.

De plus, les spires de l'élément d'armement de l'invention garantissent une déformation faible au niveau de la génératrice de contact avec les rampes d'armement, ce qui permet de garder une surface de contact inchangée entre ledit moyen d'armement et lesdites rampes d'armement, tout au long du déplacement du baladeur 5.

L'élément d'armement de l'invention assure également une bonne résistance dans le temps car l'utilisation de fil métallique permet un choix d'épaisseurs de métal plus importantes que celles utilisables pour un élément de type feuillard.

Enfin, les spires de cet élément d'armement permettent un meilleur passage de l'huile de lubrification dans ledit moyen, ce qui permet un entretien plus efficace du dispositif de synchronisation proposé.

L'invention ne se limite pas au mode de réalisation qui vient d'être décrit mais englobe d'autres exemples de réalisation. Ainsi, l'élément d'armement de l'invention peut être toute forme symétrique déformable réalisée en fil métallique.

## Revendications

1. Dispositif de synchronisation d'un pignon libre (4) en rotation autour d'un arbre de boîte de vitesses (2) avec un moyeu (1) solidaire de celui-ci, muni d'un baladeur (5) présentant au moins une rampe d'armement (6) qui repousse vers le pignon un anneau de synchronisation (3) par l'intermédiaire d'un moyen d'armement (7), déformable élastiquement sous la poussée des rampes d'armement, et au moins une denture (55) qui rencontre la denture du pignon (44) après avoir traversé la denture de l'anneau (33), caractérisé en ce que le moyen d'armement (7) est une pièce comportant une première partie supérieure arrondie (71), coopérant avec les rampes d'armement (6) et constituée d'un enroulement hélicoïdal, et une deuxième partie inférieure, coopérant avec les anneaux de synchronisation (3) et composée de deux retours latéraux identiques (7a, 7b).

2. Dispositif de synchronisation selon la revendication 1, caractérisé en ce que les retours latéraux (7a, 7b) sont repliés sur eux-mêmes de façon à permettre à la partie supérieure (71) de s'affaisser sur eux, sous la poussée des rampes d'armement (6).

3. Dispositif de synchronisation selon la revendication 1 ou 2, caractérisé en ce que chaque retour latéral (7a, 7b) se compose d'une première branche (7c), dans le prolongement de l'extrémité de la partie supérieure (71) et orientée vers l'extérieur de celle-ci, d'une deuxième branche (7d), orientée selon l'axe de la partie (71) et dirigée vers l'extrémité opposée de celle-ci, et d'une dernière branche (7e), dirigée vers l'intérieur de l'enroulement (71) et sensiblement perpendiculaire à la branche (7d).

4. Dispositif de synchronisation selon la revendication 3, caractérisé en ce que les branches (7d, 7e) des retours latéraux (7a, 7b) constituent un support de l'élément d'armement 7.

5. Dispositif de synchronisation selon l'une des revendications précédentes, caractérisé en ce que le moyen d'armement (7) est réalisé en fil métallique, enroulé en spires hélicoïdales.

6. Elément d'armement d'un synchroniseur composé d'une partie supérieure (71) coopérant avec le baladeur (5) du synchroniseur et d'une partie inférieure (7a, 7b) coopérant avec les anneaux (3) de synchronisation, caractérisé en ce que la partie supérieure arrondie (71) est constituée d'un enroulement hélicoïdal, et en ce que la partie inférieure (7a, 7b) est constituée de deux rebords latéraux (7c, 7d, 7e) repliés sur eux-mêmes, raccordés de façon symétrique à ladite partie supérieure (71) de façon à permettre à l'ensemble de l'élément (7) de se déformer dans les mêmes conditions en réponse au déplacement du baladeur (5) dans les deux sens d'actionnement.

7. Elément d'armement selon la revendication 6, caractérisé en ce que les efforts à exercer pour déformer élastiquement ledit élément d'armement (7) sont identiques, selon que le baladeur (5) se déplace vers le pignon de droite ou vers le pignon de gauche.
